# EUROPEAN PATENT APPLICATION

(11) **EP 3 644 421 A1**
(43) Date of publication of application: **29.04.2020**
(21) Application number: 18202708.6
(22) Date of filing: 25.10.2018
(51) Int. Cl.: H01M 8/0232, H01M 8/0234, H01M 8/0267, H01M 8/04029, H01M 8/04119, H01M 8/0245

(54) **ELECTROCHEMICAL REACTOR**

(71) Applicant: Ecole Polytechnique Federale De Lausanne (EPFL) EPFL-TTO, 1015 Lausanne (CH)
(72) Inventor: NANDJOU, Fredy, 1006 Lausanne (CH); HAUSSENER, Sophia, 1004 Lausanne (CH)
(74) Representative: KATZAROV S.A.

(57) **Abstract**

The present relates to an internally cooled and humidified electrochemical reactor comprising at least one multifunctional layer, which is made of a conductive open-cell material adapted to permit direct circulation of gas and liquid through it in a stratified two-phase flow regime, for humidification and cooling of said reactor. The reactor can incorporates a vapor permeable membrane, a hydrophilic wall, and fluid recirculating systems. It also relates to methods of uniformly feeding the reactants to the reactor, and efficient product removal.

## Description

### Technical Field

The present invention relates to the electrochemical field and more particularly to electrochemical reactors including stacks of electrochemical cells which, during operation, interact with at least one fluid in gas phase and one fluid in liquid phase.

### Background of the art

The technical field directed to electrochemical devices and particularly fuel cell vehicles and power-to-X energy storage is one the most innovative domains nowadays. Today, with the increasing use of renewable and alternative energy sources for power generation, efficient and cost-effective energy storage and conversion systems need to be developed and optimized. One promising solution is the electrochemical storage of renewable energy in chemical bonds, and the electrochemical conversion of the chemical commodities/fuels into electricity and/or heat for different applications, including stationary or mobile. One example is the conversion of solar energy into hydrogen via photovoltaics-driven electrolyzers or photoelectrochemical (PEC) systems. The produced hydrogen is stored and/or transported in gas pipelines or tanks, and converted via fuel cells into electrical and/or thermal energy in a vehicle or power plant.

The electrochemical conversion of energy generally, but not exclusively, relates to the automotive industries, the electric utilities, and the chemical industries. It is generally made in reactors such as, but not limited to, fuel cells, electrolyzers, redox flow batteries, and photoelectrochemical devices. Specific designs of the electrochemical reactor itself need to be developed, but also specific designs of the operating systems and auxiliary components need to be improved.

Regarding the automotive industry, for example, a general powertrain layout of a hydrogen powered vehicle comprises a fuel cell stack, where the electrochemical energy conversion takes place, which needs different ancillaries for a proper operation.

Close to the fuel cell stack, we generally have a large external humidifier for pre-humidifying the reactants, which is vital for an efficient and sustained operation. In such an application, the electrochemical reaction in the fuel cell stack generates a large amount of heat that is evacuated by sensible cooling, via an external coolant circuit. For this reason, the radiator on the front of the car is usually very large (compared to conventional cars that are powered by internal combustion engines). It evacuates the excess heat that is produced in the stack at a relatively low temperature (-80°). The external humidifier and external cooling with the large radiator are two of the main drawbacks of the fuel cell system.

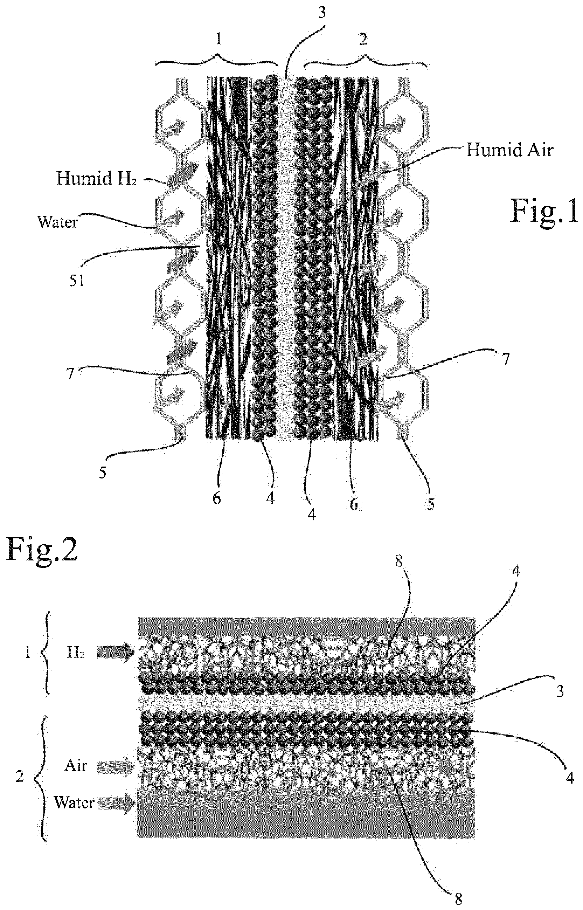

Regarding the fuel cell stack itself, it is conventionally composed of different cells assembled in parallel or in series, in order to operate at a certain potential and current. A conventional cell of an electrochemical reactor is illustrated in Figure 1. Each cell is composed of an anode compartment 1 and a cathode compartment 2, which are separated by an ionic conductor 3 also called electrolyte. Each compartment is composed of different layers that are electron conducting: catalyst layers 4, flow field plates 5, gas diffusion layers 6, and cooling plates 7.

The catalyst layers 4 are nanoporous layers where the oxidation and reduction reactions take place. The flow field plates 5 supply the cells with reactants and remove the products through integrated channels 51. The gas diffusion layers 6 are porous layers that ensure a proper reactant diffusion from the integrated channels 51 to all the catalyst layer's surface. Sometimes a microporous layer (not represented) is added between the gas diffusion layers 6 and the catalyst layers 4 in order to improve the electrical contact and mass transport characteristics. The cooling plates 7 are used to supply the coolant to the reactor, in order to remove the excess heat.

The channel/rib structure of the integrated channels 51 induces mass transport limitations and flooding at high currents densities, which significantly limits the reactor's performance. As we can see from Figure 1, the bipolar (flow field) plates 5 are in contact with the diffusion layer in a discontinuous manner such that it induces local hot spots and thermal stresses over the active area, which is detrimental for the durability of the fuel cell. Moreover, the flow field plates 5 are usually made of metals, graphite, or composite materials, and the machining cost is relatively high, they account for 30 - 45 % of the total cost of the reactor. Also, the weight of the flow field plates is relatively high, accounting for - 60 - 80 % of the total weight of the reactor, limiting the fuel cells application for mobility applications. Furthermore, although it is essential to humidify the reacting gases before they enter the cell for ensuring a good ionic conductivity of the electrolyte, the presence of an external humidifier induces additional costs and weights to the electrochemical system.

The main problems of the conventional fuel cells are therefore the limited performance at high currents, the limited power density, the poor durability, and the high cost.

In this regard, a primary object of the invention is to solve the above-mentioned problems and more particularly to provide a fuel cell which provides higher power density and performs at high currents while being lighter and less expensive.

### Summary of the invention

The above problems are solved by the present invention.

In general, the present invention relates to an innovative device and operation strategy for electrochemical reactors, which allows to obtain significant gains in terms of performance and power density, while reducing cost and extending lifetime. The general concept consists in using multifunctional layers that simultaneously play the role of reactants distribution, products removal, humidification and heat exchange. The electrochemical cells are in a horizontal arrangement, operate in specific flow regimes, and use gravity in order to evacuate liquid water and to avoid flooding.

A first aspect of the invention is an internally cooled electrochemical device comprising a first electrode compartment and a second electrode compartment separated by an electrolyte, each electrode compartment comprising an electrode layer and a multifunctional layer, wherein the multifunctional layer of at least one of the electrode compartments is made of a conductive open cell material adapted to permit direct circulation of gas and liquid through it in an gas-liquid stratified two-phase flow regime across said cell for humidification and cooling of said cell. Thanks to this, we can avoid the need for an external cooling system and an external humidifying system.

Preferably, the conductive open cell materials include a solid matrix comprising thin fibers of a heat and electrically conductive material and a void space between the fibers. Therefore, the weight is lower.

Advantageously, the conductive open cell material is chosen from the group comprising metal alloys such as open cell metal foams, carbon glass such as reticulated vitreous carbon foam, graphite foam, carbon-based composite foams and metal-based composite foams.

Preferably, the internally cooled electrochemical device further comprises a hydrophilic wall deposited on at least a portion of the multifunction layer. Thanks to this, the liquid flow does not leak.

In a preferable embodiment, the internally cooled electrochemical device further comprises a membrane provided within the multifunctional layer so as to separate the two phases of gas-liquid stratified two-phase flow. In this manner, we have a clear separation between the gas flow and the liquid flow.

According to a preferred embodiment of the present invention, the membrane is permeable to vapor but not to liquid. In this manner, the evaporation process is not hindered.

A second aspect of the invention is an electrochemical reactor comprising a plurality of internally cooled electrochemical cells according to the preceding claims, said internally cooled electrochemical cells being mounted in series and/or in parallel. The particular advantages of this reactor of the invention are similar to the one above that is we can avoid the need for an external cooling system and an external humidifying system..

Preferably, the electrochemical reactor further comprises a gas circulating system and a liquid circulating system adapted to circulate gas and liquid through the electrochemical devices in a stratified flow regime.

Advantageously, the gas circulating system is adapted to circulate (reacting) gases through the multifunctional layers of both compartment of each electrochemical device.

Preferably, the liquid circulating system is adapted to circulate liquid through the multifunctional layer of at least one compartment of each electrochemical cell.

According to a preferred embodiment of the present invention, the liquid circulating system is adapted to circulate a continuous liquid flow separated from the gas flow. Thus, we create a temperature gradient favoring evaporation and humidification.

Advantageously, the electrochemical devices are in a horizontal arrangement such that liquid flows along the bottom of each compartment. It is therefore easier to separate the gas and liquid flows from each other.

Preferably, the electrochemical reactor further comprises a liquid recirculating system. Thanks to this, one can save liquid.

### Brief description of the drawings

Further particular advantages and features of the invention will become more apparent from the following non-limitative description of at least one embodiment of the invention which will refer to the accompanying drawings, wherein
- Figure 1 represents a partial cross section of a conventional electrochemical device ;
- Figure 2 represents a partial cross section of a electrochemical device according to a preferred embodiment of the present invention;

### Detailed description of the invention

The present detailed description is intended to illustrate the invention in a non-limitative manner since any feature of an embodiment may be combined with any other feature of a different embodiment in an advantageous manner.

The present invention is described in Figure 2 which schematically illustrates the innovative structure of an electrochemical reactor according to a preferred embodiment of the present invention. The electrochemical reactor is preferably coupled to a proper heat and liquid management, which allows to overcome the drawbacks explained above.

The electrochemical reactor of the present invention is preferably composed of different electrochemical cells, such as fuel cells assembled in parallel and/or in series, in order to operate at a certain potential and current. A fuel cell as an example of an electrochemical reactor is illustrated in Figure 2. Each cell is composed of an anode compartment 1 and a cathode compartment 2, which are separated by an ionic conductor 3 also called electrolyte and catalyst layers as in the conventional cells. However, different from the conventional cell in that each compartment lacks the flow field plates, the gas diffusion layers, and the cooling plates.

More particularly, instead of these different conventional layers/plates the electrochemical reactor preferably uses conductive open cell materials as multifunctional layers 8 that simultaneously allows for reactants distribution, products removal, humidification, and heat exchange. Conductive open cell materials include a solid matrix in the form of thin fibers for electricity and heat conduction, and a void space between the fibers that enables transport of fluids.

This solid matrix forms a cellular skeleton, while the void space forms interconnected cells. They can be manufactured using different metal alloys such as open cell metal foams, carbon glass such as reticulated vitreous carbon foam and other conductive materials.

Thanks to their high porosity, these materials have a relatively low weight, offering a particular advantage for mobility applications. The structure of the innovative fuel cell is illustrated in Figure 2. We can see that the electrochemical cell is in a horizontal arrangement, operates in a stratified flow regime, i.e. gas and liquid phases flow separated in the form of continuous layers, the liquid flow being under the gas flow for weight reasons, and uses gravity in order to evacuate liquid while avoiding electrode flooding. The gas is preferably air and the liquid is preferably water and in the following description air and water will be described but the present invention is not limited thereto. The term horizontal here shall not be understood as strictly horizontal such as perpendicular to vertical but shall be understood as an orientation which permits a proper separation between the water and air flows within the fuel cell. More particularly, the electrochemical cells are preferably in horizontal arrangement but have a certain tolerance in tilting during operation. For tilted cells, a proper gas and liquid volumetric flow rates management allows to keep the flow regime in the stratified zone.

The air is directly fed into the multifunctional layers on both sides of the electrolyte and the water is also directly fed to the bottom of the cell. However, it is possible to feed the water on top of the fuel cell and it will fall by gravity thereby crossing the air flow. With such an arrangement, the air is even more humidified. The water which is fed into the reactor can be fresh water, but it also can be recycled water. In order to have a recycling circuit to feed recycled water in the reactor, a condenser can be provided at the output to collect the outputted water and to send it again to the reactor water inlet.

In fact, the two-phase flow needs to be carefully monitored in the multifunctional layer, with gas and liquid phases that flow separately in the form of continuous layers. Their respective thicknesses are relative to their relative volumetric flow rates.

Even at gas phase velocities above 10 m/s, a stratified flow regime can be kept for certain liquid phase velocities. The superficial velocities depend on the channel section, which in turn depends on the geometrical design of the cell. If one considers a 200 cm² rectangular active area cell, with a thickness of 3 mm, operating at a relatively high current density (2 A/cm²). For the given surface area, different length/width ratios can be chosen, largely impacting the superficial velocities. One has observed that whatever the geometrical design, the gas phase superficial velocity required for the electrochemical reaction completely respects the limits for the stratified flow regime. There is high flexibility for the geometrical design of the cell: we can have long cells with small channel sections, or short cells with very high channel sections.

On the other hand, although it is not represented in the figure, the air flow and the water flow can also be physically separated by a (horizontal) membrane which would be impermeable to liquid water while letting the evaporated water cross the multifunctional layer.

Due to the water evaporation at the interface with the gas, the reacting gas and the electrode (latter by moisture diffusion) become wetter. The evaporative humidification rate depends on the fluids velocity at their interface, the interfacial surface area, the temperature, and the partial pressure of vapor in the gas. The external humidifier, which is expensive and space and energy consuming, can be avoided.

Ambient air and liquid water are continuously fed to the porous matrix (with flow rates that respect the stratified flow regime as explained above) during the operation of the fuel cell, while the electrochemical reaction generates water and heat at the electrode interface, which are transported in the porous matrix. Water evaporation at the humid air/liquid water interface induces a progressive humidification of the electrode and evaporative cooling, which assists the sensible heat cooling by convection between the air flow/water flow and the porous structure. The evaporative cooling and humidification of the cell of the present invention is highly efficient in the system. It allows to keep acceptable humidity and temperature values in the cell, even at high currents. With evaporative humidification, there is a continuous flow of water from the porous matrix to the electrode. Given that water is also produced in the electrode during the electrochemical reaction, at a certain point water could condensate in the electrode, inducing flooding, which dramatically limits mass transport. Fluid dynamics investigations of the liquid water should be performed in order to avoid electrode flooding.

In case of condensation on the electrode, it is important to ensure that the water droplet formed on the active area surface will fall down in the porous structure due to gravity, and that the gas pressure will be able to blow it out of the pores. To this end, a balance between the associated adhesive, drag, buoyant and gravity forces is needed. It was however clearly observed that there could be a local condensation in the cell, with the formation of small water droplets on the electrode. At a certain critical diameter of the droplet (-1mm), the gravity force overcomes all the other forces, thus the droplet detaches from the electrode, avoiding flooding.

As we can see in Figure 2, the open cell material replaces the gas diffusion layer, the flow field plate, and the cooling plate, given that it provides all the required functionalities of these three components. In particular, the multifunctional layer provides the following detailed functions to the fuel cell:

### Electrons transport

The solid matrix of the conductive open cell material forms a good electron conducting structure, with an effective electrical conductivity that depends on the porosity. It is preferably higher than 10⁵ S/m. This value is better than the electrical conductivities of the components in conventional design, which are -4000 S/m for the gas diffusion layer and ∼10⁵ S/m for stainless steel flow field plates.

Thanks to the good and uniform mechanical stress, compared to the conventional architecture where the mechanical stress is located only under the rib, there is a low and uniformly distributed interfacial contact resistance with the electrode.

### Reactants transport

The void space between the fibers, i.e. the porosity, which represents -75-95% of the volume of the multifunctional layer material, allows a proper fluid transport between the fibers without a significant pressure drop. The hydraulic permeability of the open cell material is preferably between 10⁻⁸ and 10⁻⁷ m². The mass transport, which is highly limited under the ribs in the conventional architecture because of the longer and more tortuous diffusion path, and liquid water accumulation, is significantly enhanced with this structure, resulting in better performances. Thanks to the enhanced mass transport, lower catalyst loading is needed, which significantly contributes to reduction of the reactor's complexity.

### Products removal

In general, electrode flooding is unwanted in applications such as fuel cells given by its poor transport characteristics. A proper two-phase flow management technique is therefore needed. The present invention provides a simple two-phase flow management approach in the cells thanks to the horizontal arrangement (see above the meaning of horizontal). In fact, this arrangement, in addition to the clear separation between the two fed flows (water and air), also uses gravitational force to remove the condensed water from the electrode, avoiding flooding. Structured multifunctional layers with graded pore size, which can, for example, be manufactured by additive manufacturing, and hydrophobic/hydrophilic coating can also be used to control liquid water distribution.

### Heat transport and evaporative cooling

Heat is generated in the catalyst layer and transferred to the open cell material by conduction. The solid matrix of the conductive open cell material forms a good thermally conducting structure, with an effective thermal conductivity that generally varies from -1 to 15 W/m/K. Heat is removed from the fibers via convection/conduction with the fluids, and evaporation of liquid water. The specific surface of heat convection is relatively high for open cell materials, ranging from -4'000 to 10'000 m2/m3. A liquid coolant (for example water) is fed in the multifunctional layer at the same time with the reacting gases. The mass flow rates of both phases (liquid and gas) are controlled in order to stay in a stratified or stratified-wavy two-phase flow regime, which allows to avoid electrode flooding. In order to ensure a stratified or stratified-wavy flows, experimental measurements, empirical correlations, or two-phase flow maps can be used.

Due to the lower heat capacity of the gas compared to liquid water and its proximity to the heating electrode, the gas gets hotter than water. As a consequence, at the gas/water interface there is an evaporative cooling: water evaporates towards to the reacting gas stream, reducing its temperature while increasing its humidity. Evaporative cooling significantly assists the (sensible heat) cooling of the reactor. Thanks to evaporative cooling, the temperatures are more homogeneous, the required coolant flow rate is lower, and there is efficient heat removal. Moreover, we expect a uniform cooling compared to the traditional channel/rib architecture, which generates high local heterogeneities in the stack and induces high thermal stresses in the membrane in dynamic conditions, with the consequence of exacerbated degradation.

Globally, the present invention permits to increase the fuel cell efficiency by ∼ 34%, limits the temperature gradients in the cell (compared to the conventional cell), and avoids local hot spots, which are known to be detrimental for durability.

In order to compare the weights of fuel cells in mobility applications, one considers the materials and components that are commonly used in the commercial hydrogen powered cars. Bipolar plates are usually made of stamped and welded stainless steel (SS 316L) sheets, with surface coating. Gas diffusion layers are composed of macroporous carbon paper, with an integrated microporous layer. The humidifier can be either a tubular membrane humidifier or a plate frame membrane humidifier.

On the other hand, the potential materials for the multifunctional layer are corrosion resistant open cell metal alloys (stainless steel, nickel, titanium, etc.), carbon glass (reticulated vitreous carbon foam), graphite, and composite materials. The weight comparisons for the conventional and innovative systems are presented below.

| **Component** | **Weight (kg/kW)** |
|---|---|
| External humidifier's system | 0.1 |
| Bipolar plate (stainless steel) | 0.4 |
| Gas diffusion layer | 0.09 |
| **Total** | **0.59** |
| **Multifunctional layer** | **0.2** |

Considering that an automotive fuel cell's power is around 120 kW, it can be stated that the present invention, in addition of increasing the efficiency by 34 %, has the potential to lower the weight by -47 kg, which represents -50 % of fuel cell system's total weight.

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This is for example particularly the case regarding the different materials which can be used, the specific reacting and produced fluids (air, hydrogen, water, methanol, etc.), and the specific operating conditions.

## Claims

1. Internally cooled and humidified electrochemical device comprising
a first electrode compartment (1) and a second electrode compartment (2) separated by an electrolyte (3),
each electrode compartment comprising an electrode layer (4) and a multifunctional layer (8),
wherein the multifunctional layer of at least one of the electrode compartments is made of a conductive open cell material adapted to permit direct circulation of reacting gas and liquid through it in an gas-liquid stratified two-phase flow regime across said cell for humidification and cooling of said cell.

2. Internally cooled and humidified electrochemical device according to claim 1, **characterized in that** the conductive open cell materials include a solid matrix comprising thin fibers of a heat and electricity conductive material and a percolating void space between the fibers.

3. Internally cooled and humidified electrochemical device according to claim 1 or 2, **characterized in that** the conductive open cell material is chosen from the group comprising metal alloys such as open cell metal foams, carbon glass such as reticulated vitreous carbon foam, graphite foam, carbon-based composite foams and metal-based composite foams.

4. Internally cooled and humidified electrochemical device according to any one of claims 1 to 3, **characterized in that** it further comprises a hydrophilic wall deposited on at least a portion of the multifunction layer.

5. Internally cooled and humidified electrochemical device according to any one of claims 1 to 4, **characterized in that** it further comprises a membrane provided within the multifunctional layer so as to separate the two phases of gas-liquid stratified two-phase flow.

6. Internally cooled and humidified electrochemical device according to any one of claims 1 to 5, **characterized in that** the membrane is permeable to vapor but not to liquid.

7. Electrochemical reactor comprising a plurality of internally cooled electrochemical devices according to the preceding claims, said internally cooled electrochemical devices being mounted in series and/or in parallel.

8. Electrochemical reactor according to claim 7, **characterized in that** it further comprises a gas circulating system and a liquid circulating system adapted to circulate gas and liquid through the electrochemical devices in a stratified flow regime.

9. Electrochemical reactor according to claim 8, **characterized in that** the gas circulating system is adapted to circulate the reacting gases through the multifunctional layers of both compartment of each electrochemical device.

10. Electrochemical reactor according to claim 8 or 9, **characterized in that** the liquid circulating system is adapted to circulate liquid through the multifunctional layer of one compartment of each electrochemical device.

11. Electrochemical reactor according to claim 10, **characterized in that** the liquid circulating system is adapted to circulate a continuous liquid flow separated from the gas flow.

12. Electrochemical reactor according to claim 11, **characterized in that** the electrochemical devices are in a horizontal arrangement such that the liquid flows along the bottom of each electrochemical device.

13. Electrochemical reactor according to claims 7 to 12, **characterized in that** it further comprises a fluid recirculating system.
